# EUROPEAN PATENT APPLICATION

(11) **EP 2 166 538 A1**
(43) Date of publication of application: **24.03.2010**
(21) Application number: 09170013.8
(22) Date of filing: 11.09.2009
(51) Int. Cl.: G11B 20/12

(54) **Method using coding information for data on a storage medium, and corresponding storage medium**

(30) Priority: 23.09.2008 EP 08305582
(71) Applicant: Thomson Licensing, 92443 Issy-les-Moulineaux Cedex (FR)
(72) Inventor: Georgi, Marco, 30855, Langenhagen (DE); Theis, Oliver, 30655, Hannover (DE)
(74) Representative: Thies, Stephan

(57) **Abstract**

The present invention relates to a storage medium having a first area (202) and a second area (204). According to the invention, the first area (202) is recorded in a predefined first physical format and contains a parity check matrix information about an error correction code of a second physical format. The second area (204) is recorded in the second physical format. Methods according to the invention relate to reading data and to recording data.

## Description

The present invention relates to the field of storage systems for use in computers. In particular, exemplary embodiments of the present invention relate to the encoding or decoding of data on a storage medium such as a disk.

Known storage media typically employ one fixed decoding algorithm matched to a corresponding encoding or recording format as described in a standard. A decoder can decode all disks that are compliant with this standard. Moreover, compliant encoders have to be adapted to write data according to the standard. This system is not very flexible because it inhibits the adoption of different decoding or encoding algorithms.

In the above, "decoding algorithm" shall refer to decoding steps involved in decoding what is known in the field as the "physical format" or "physical layer format" of a storage medium. The decoding of the "logical format" or the "application format" are not being addressed here. On application format level, allowing and decoding multiple coding formats on a single storage medium is known in the field.

Physical format decoding may involve processing steps like signal acquisition, symbol clock regeneration, demodulation, RLL decoding, and error correction decoding. For these decoding steps, variants of individual complexity, speed or performance are known.

One example of a problem with the current practice of uniform physical layer format per storage medium is illustrated if one considers a situation where a disk type having a higher data density is developed. The higher data density of the new disk type may require a better error correction code, which would then necessitate the creation of a new standard. After adoption of the standard, new decoder devices would need to be designed to implement the new standard. This could be a long process, resulting in a significant delay in bringing new technologies to market.

Another example relates to the development of disks with a smaller diameter. Resulting scanning speed variations and other factors e.g. of geometry may entail a changed distribution of errors over the disk surface, eventually making it desirable to employ new error correction codes that differ from previously defined ones. This could result in the necessity for a new error correction code standard, entailing the delay described above.

Another consideration relates to the fact, that in current physical formats employing a single decoding parameter setting, parameters have to be dimensioned taking into account worst-case scenarios. A uniformly chosen system parameter chosen according to worst-case requirements valid in some area of the disk, inherently is over-restrictive and hence sub-optimal in other areas having laxer requirements.

International Patent Application Publication No. WO200193262 to Zaharris, et al. purports to disclose a writable system area containing the attributes of data stored in a writable data area. The writable system area is separated by a blank region from the writable data area. The writable data area is adjacent to the outer boundary of a writable area. The writable system area and the writable data area contain data written in error correction code or ECC blocks of sizes of 2K bytes and 16K bytes, respectively.

U.S. Patent Application Publication No. US 2004/0247033 to Cho, et al. purports to disclose a video data coding/decoding apparatus that includes an encoder that divides a partition partitioned by a data partitioning technique into certain blocks. The encoder channel-codes the divided block data and transmits a bit stream. A decoder channel-decodes the bit stream received from the encoder so as to restore video data. An error occurrence probability can allegedly be reduced by performing an unequal error protection for each partition.

U.S. Patent No. 6,192,188 to Dierke purports to disclose a programmable audio/video encoder that is capable of receiving an encoding algorithm from an external digital information source. One described system accepts recordable DVD disks having a read-only sector for storing customized video encoding algorithms and programs the programmable video encoder with the customized video encoding algorithms prior to encoding and recording a video signal on the disk. By designing the video encoding algorithms to optimize one or more of a number of desirable attributes, the DVD media vendors can then create "classes" of recordable DVD disks, i.e. high capacity, high quality, high speed, high image detail, high color resolution or variable frame rate. One programmable video encoder for the disclosed device would include an instruction memory for storing the customized video algorithms, a video buffer for buffering the video signal, and a CPU that encodes the video signal according to the customized video algorithms.

An improved method and system for flexibly providing coding information for data on a storage medium is desirable.

A storage medium according to the invention is set forth in claim 1. The storage medium has a first area and a second area. The first area is recorded in a predefined first physical format and contains a parity check matrix information which characterises an error correction code of a second physical format. The second area is recorded in the second physical format.

The information about the second physical format may comprise at least one parameter about a coding algorithm. The information about the second physical format may comprise, for example, information about a Low Density Parity Check code, abbreviated as "LDPC code" herein, or about a Reed-Solomon code, abbreviated as "RS code" herein, or information about a run-length limited code, abbreviated as "RLL code" herein. Moreover, the information about the second physical format may comprise computer-readable instructions adapted to allow a controller to read the data recorded according to the second physical format.

The storage medium according to the invention may comprise more than one second area, each having its own second physical format. In a storage medium of the latter kind, a location or position of the multiple second areas may either be predefined and agreed upon, or it may be freely definable, in which case the information about the more than one second physical formats may comprise a position information of at least one of the second areas.

A method for reading data from a storage medium having a storage space with a first area and a second area in accordance with the invention is set forth in claim 5. The method comprises reading from the first area, according to a predefined first physical format, a parity check matrix information which characterises an error correction code of a second physical format. The method of reading data additionally comprises reading data from the second area according to the second physical format.

A method for recording data on a storage medium having a storage space with a first area and a second area in accordance with the invention is set forth in claim 9. The method comprises recording to the first area, according to a predefined first physical format, a parity check matrix information which characterises an error correction code of a second physical format. The method of recording data additionally comprises recording data to the second area according to the second physical format.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.
- Fig. 1: shows a block diagram of an optical disk drive system in accordance with an exemplary embodiment of the present invention.
- Fig. 2: shows a block diagram of a disk in accordance with an exemplary embodiment of the present invention.
- Fig. 3: shows a process flow diagram showing a method of reading data from a storage medium in accordance with an exemplary embodiment of the present invention.
- Fig. 4: shows a process flow diagram showing a method of recording data to a storage medium in accordance with an exemplary embodiment of the present invention.

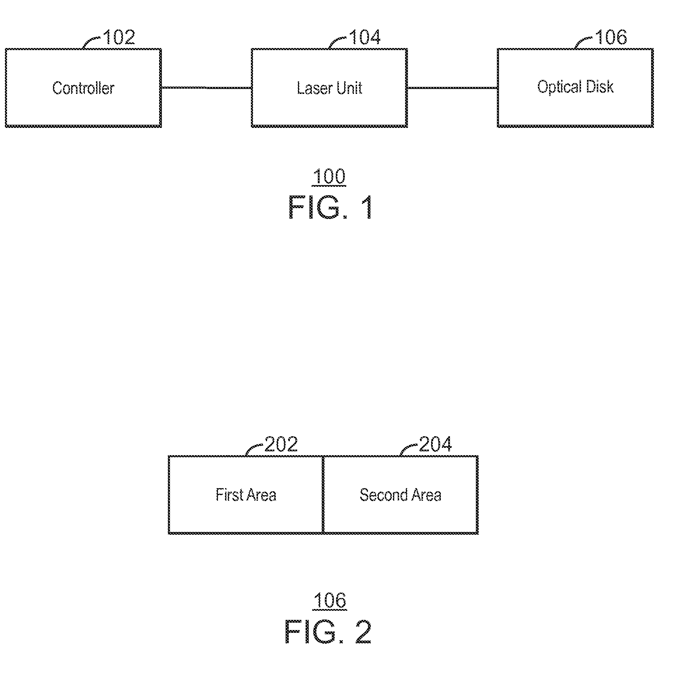

As set forth above, Fig. 1 shows a block diagram of an optical disk drive system in accordance with an exemplary embodiment of the present invention. The skilled person will appreciate that the optical disk drive system 100 may comprise hardware elements including circuitry, software elements including computer code stored on a machine-readable medium or a combination of both hardware and software elements.

The optical disk drive system 100 includes a controller 102 that is adapted to control the overall operation of the system. A laser unit 104 is adapted to direct a beam of laser light onto an optical disk 106 disposed within the optical disk drive system 100. The laser unit 104 includes an optical pick-up that receives reflected light from the optical disk 106 and translates the reflected light energy into a signal corresponding to data stored on the optical disk 106.

The skilled person will appreciate that, besides on optical disks, the invention can as well be used on other disk storage systems, such as magnetic disks. Therefore, the following description will only denote "disks".

In accordance with an exemplary embodiment of the present invention, a parity check matrix information which characterises an error correction code of a decoding method needed to decode data stored on the disk 106 is also stored on the disk 106. The parity check matrix information may be stored in a reserved area, such as at the beginning of the disk. The reserved area that stores the parity check matrix information is referred to as the "first area" herein. If the disk 106 is a bootable disk, the first area may be separate from any other reserved areas used to store boot information. The parity check matrix information may be retrieved by the controller 102 and used to decode data stored on a separate area of the disk 106. The separate area that stores data encoded according to the error correction code characterized by the parity check matrix information stored in the first area, is referred to as the "second area" herein. The decoding algorithm needed to decode the parity check matrix information stored in the first area of the optical disk 106 is desirably fixed and predefined.

Because the number of possible decoding algorithms is very large, limitations can be imposed to reduce the number of possible algorithms that may be applied to data stored in the second area of the disk. Imposing restrictions on the way decoding information is described in the first area of the disk 106 may facilitate realistic implementations of decoder devices by establishing a pattern for storing the decoding data in the first area of the disk 106. According to the invention, an error correction algorithm can be predefined as being an LDPC code LDPC in combination with an RS code. In this case only parameters for the LDPC code such as its parity check matrix may be stored in the first area of the disk. Given such parameters, the programming of the controller 102 is configured to interpret the LDPC code parameter data and to apply the LDPC code using those parameters. Similarly, parameters for the RS code such as codeword length, number of parities or the like may also be stored on the first area of the disk 106. Given such parameters, the programming of the controller 102 is configured to interpret the RS code parameter data and to apply the RS code using those parameters.

In another type of limitation to reduce the number of possible algorithms, channel modulation may be predefined to consist of a run length limited code, abbreviated as "RLL code" herein, in which case RLL parameters such as smallest allowable runlength, largest allowable runlength, and the like, may be stored in the first area of the disk. Given such parameters, the programming of the controller 102 is configured to interpret the RLL parameter data and to apply the RLL decoding using those parameters.

In one exemplary embodiment of the present invention, the decoding algorithm need not necessarily be the same for the entire disk, nor for the entire second area thereof. For example, the disk 106 may be partitioned or subdivided into several partitions or subdivisions, and a different decoding algorithm be employed per partition. In another, extreme variant, individual sectors of the disk 106 would be considered as subdivisions, and different decoding algorithms be allowed for each sector. In yet another variant, applicable on multilayer disks, it may be the layers which take the role of subdivisions, enabling for distinct decoding algorithms per information layer. The skilled person will appreciate that combinations of these variants and embodiments all lie within the scope of the invention.

In any of the variants above, the information about the decoding algorithms used in the subdivisions can either be stored in individual, multiple first areas situated at the beginning of or in front of each subdivision, or globally in a single first area situated at the beginning of the disk.

Allowing a subdivision of the recording medium, with distinct parameter settings being chosen per subdivision area, contributes to optimize storage capacity or access speed.

In one exemplary embodiment of the present invention, the controller 102 is reprogrammable. In this embodiment, a software program to decode the disk can be stored on the disk in the first area and the controller 102 can obtain it directly from the disk 106.

Fig. 2 is a block diagram of an optical disk in accordance with an exemplary embodiment of the present invention.

Moreover, Fig. 2 shows a more detailed view of the disk 106. The disk 106 is divided into two separate areas. As set forth above, a first area 202 of the disk 106 is adapted to store decoding parameters that are usable by the controller 102 to decode data stored on a second area 204 of the disk 106.

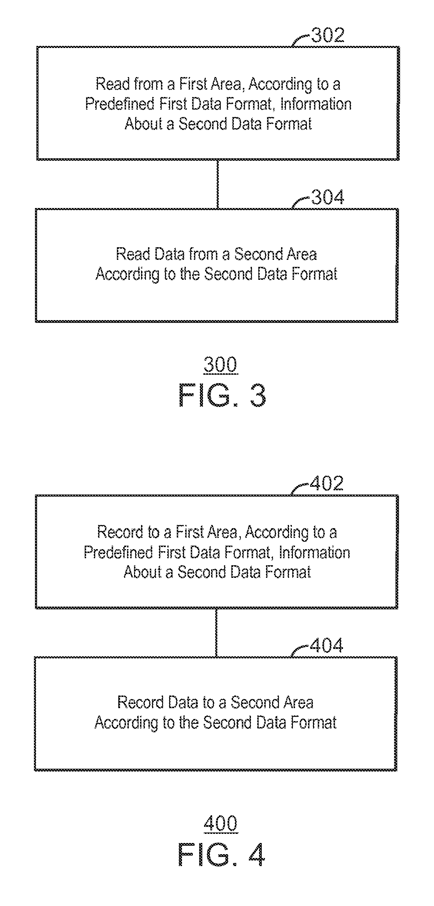

Fig. 3 is a process flow diagram showing a method of reading data from a storage medium in accordance with an exemplary embodiment of the present invention. The method is generally referred to by the reference number 300. The method 300 relates to reading a parity check matrix information stored in the first area 202 of the disk 106 according to a predefined first physical format. The parity check matrix information relates to data stored in a second area 204 of the disk 106 according to a second physical format. At step 302, the parity check matrix information about the error correction coder of the second physical format is read from the first area 202 of the disk 106 according to the predefined first physical format. At step 304, the parity check matrix information about the second physical format is used to actually read the data stored in the second area 204 of the disk 106 according to the second physical format.

Fig. 4 is a process flow diagram showing a method of writing data to a storage medium in accordance with an exemplary embodiment of the present invention. The method is generally referred to by the reference number 400. The method 400 relates to encoding information on a storage medium such as the disk 106. At step 402, a parity check matrix information about an error correction code of a second physical format is recorded to the first area 202 of the disk 106 according to a predefined first physical format. At step 404, data is recorded to the second area 204 of the optical disk 106 according to the second physical format.

The skilled person will appreciate that an exemplary embodiment of the present invention allows easy adaptation of new decoding algorithms. Moreover, an exemplary embodiment of the present invention eliminates the need for a standard physical format. Further, the skilled person will appreciate that, while the exemplary embodiments described herein are decoders, the principles of the invention apply equally to encoders.

The skilled person will appreciate that combining any of the above-recited features of the present invention together may be desirable.

## Claims

1. A **storage medium** (106) comprising a storage space having a first area (202) and a second area (204), wherein the first area (202) is recorded in a predefined first physical format and contains a parity check matrix information about an error correction code of a second physical format, and wherein the second area (204) is recorded in the second physical format.

2. A storage medium (106) according to claim 1, wherein the parity check matrix information comprises computer-readable instructions adapted to allow a controller (102) to read the data recorded according to the second physical format.

3. A storage medium (106) according to one of claim 1 to claim 2, wherein the first area (202) contains two or more parity check matrix informations about as many second physical formats, the storage medium (106) having as many of the second areas (204) recorded in the respectively associated second physical formats.

4. A storage medium according to claim 3, wherein at least one of the parity check matrix informations comprises information about the location of the respective second area.

5. A **method** (300) for **reading** data from a storage medium (106) comprising a storage space having a first area (202) and a second area (204), the method comprising steps of:
- reading (302) from the first area (202), according to a predefined first physical format, a parity check matrix information about an error correction code of a second physical format; and
- reading (304) data from the second area (202) according to the second physical format.

6. A method (300) for reading data according to claim 5, wherein the step of reading the partiy check matrix information comprises reading computer-readable instructions adapted to allow a controller (102) to read the data recorded according to the second physical format.

7. A method (300) for reading data according to one of claim 5 to claim 6, where the step of reading the parity check matrix information is repeated for two or more second physical formats, and where the step of reading (304) data is repeated for two or more of the second areas (202) according to the respective second physical formats.

8. A method (300) for reading data according to claim 7, wherein at least one of the steps of reading the parity check matrix information comprises reading information about the location of the respective second area.

9. A **method** (400) for **recording** data on a storage medium (106) comprising a storage space having a first area (202) and a second area (204), the method (400) comprising steps of:
- recording (402) to the first area (202), according to a predefined first physical format, a parity check matrix information about an error correction coder of a second physical format; and
- recording (404) data to the second area (204) according to the second physical format.

10. A method (400) for recording data according to claim 9, wherein the step of recording the parity check matrix information comprises recording computer-readable instructions adapted to allow a controller (102) to read the data recorded according to the second physical format.

11. A method (400) for recording data according to one of claim 9 to claim 10, wherein the step of recording (402) the parity check matrix information is repeated for two or more second physical formats, and where the step of recording (404) data is repeated for two or more of the second areas (204) according to the respective second physical formats.

12. A method (400) for recording data according to claim 11, wherein at least one of the steps of recording the parity check matrix information comprises recording information about the location of the respective second area.
